# EUROPEAN PATENT SPECIFICATION

(11) **EP 2 217 637 B1**
(45) Date of publication and mention of the grant of the patent: **11.05.2011**
(21) Application number: 08854038.0
(22) Date of filing: 20.11.2008
(51) Int. Cl.: C08G 59/40, C08G 59/32, C08K 5/5313, C08K 5/315

(54) **DIMETHYLFORMAMIDE-FREE FORMULATIONS USING DICYANADIAMIDE AS CURING AGENT FOR THERMOSETTING EPOXY RESINS**
DIMETHYLFORMAMIDFREIE FORMULIERUNGEN MIT DICYANADIAMID ALS HÄRTEMITTEL FÜR WÄRMEHÄRTENDE EPOXIDHARZE
FORMULATIONS EXEMPTES DE DIMÉTHYLFORMAMIDE UTILISANT DU DICYANDIAMIDE COMME AGENT DE DURCISSEMENT POUR LE THERMODURCISSEMENT DE RÉSINES ÉPOXY

(30) Priority: 29.11.2007 US 991175 P
(43) Date of publication of application: 18.08.2010
(73) Proprietor: Dow Global Technologies LLC, Midland, MI 48674 (US)
(72) Inventor: GAN, Joseph, F-67100 Strasbourg (FR)
(74) Representative: Raynor, John
(86) International application number: PCT/US2008/084161
(87) International publication number: WO 2009/070488

(56) References cited:
- EP-A- 1 818 350
- DE-A1- 4 111 418
- US-A1- 2002 168 527
- US-B1- 6 403 220
- DATABASE WPI Week 200352 Thomson Scientific, London, GB; AN 2003-545599 XP002513482 -& JP 2003 012765 A (DAINIPPON INK & CHEM INC) 15 January 2003 (2003-01-15)

## Description

### BACKGROUND OF DISCLOSURE

### Field of the Disclosure

Embodiments disclosed herein relate generally to the elimination of toxic and high boiling solvents, such as DMF, NMP, and DMSO, in epoxy formulations where dicyandiamide is used as a curing agent. More specifically, embodiments disclosed herein relate to hardener compositions and cured resins that are formed from such curable compositions, where the hardener compositions include an epoxy resin, dicyandiamide, and a phosphorus-containing phenolic hardener.

### Background

Resin compositions used in electrical laminate applications often require a good balance of properties. For example, a resin composition having a low viscosity may reduce problems with voids, poor fiber wetting, poor prepreg appearance, and other issues. Cured resins having a high glass transition temperature are also desirable. Solvents are often used in forming the resin compositions, such as to lower resin viscosity or to solubilize a catalyst or hardener.

Dicyandiamide is a common hardener for epoxy resins, particularly for solvent-containing electrical laminate and composite applications. Dicyandiamide has limited solubility in common organic solvents, and thus limits the choice of solvents available for these solvent-containing applications.

Polar solvents, such as dimethylformamide (DMF), dimethylsulfoxide (DMSO) and N-methylpyrodinone (NMP), are commonly used with dicyandiamide. Unfortunately, such solvents are toxic, have high boiling points, which makes it difficult to remove the solvent from a prepreg, or are not suitable for applications where a low amount of residual solvent in the prepregs are required in order to obtain optimized performance. Additionally, due to its toxicity, industry is attempting to reduce or eliminate the use of DMF in electrical laminate applications.

Various flame retardants and flame retardant epoxy compositions containing phosphorus compounds are disclosed in publications such as WO2007011075, JP2006342217, EP1657972, WO2005118604, JP2005067095, CN1488672, U.S. Patent No. 6,797,821, JP2003206392, JP2003049051, JP2003012765, JP2002265567, JP2002322241, and U.S. Patent No. 6,291,627, among others. Phosphorus-containing epoxy compounds are also disclosed in WO2006059363, JP2004175895, JP2003342349, JP2003171438, JP2002249540, and U.S. Patent Nos. 6,720,077 and 6,054,515, among others. JP2002302529, as another example, discloses a dicyandiamide added phosphorus modified epoxy resin which exhibits some flame resistance. Many of these publications disclose the use of 9,10-dihydro-9-oxa-10-phosphaphenanthrene-10-oxide (sometimes represented as DOPO) as the phosphorus-containing compound used.

Accordingly, there exists a need for DMF-free formulations using dicyandiamide as a curing agent for thermosetting epoxy resins.

### SUMMARY OF THE DISCLOSURE

In one aspect, embodiments disclosed herein relate to substantially homogeneous solutions including dicyandiamide and phenolic hardeners having the general formula: 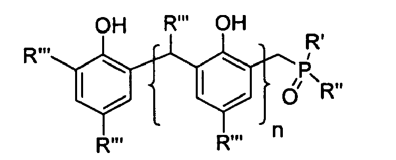 where R' and R" may be the same or different and each represents R- or RO- radicals, with R being an alkyl or aromatic radical; R"' is hydrogen, an alkyl or aromatic radical, -CH₂P(O)R'R", or -CH₂OR; n is a whole number within the range from 0 to 100.

In other aspects, embodiments disclosed herein relate to curable compositions including an epoxy resin, dicyandiamide, and phenolic hardeners having the general formula: 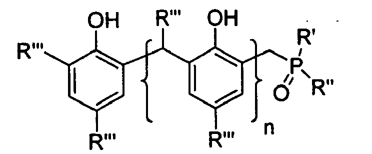 where R' and R" may be the same or different and each represents R- or RO- radicals, with R being an alkyl or aromatic radical; R"' is hydrogen, an alkyl or aromatic radical, -CH₂P(O)R'R", or -CH₂OR n is a whole number within the range from 0 to 100.

In other aspects, embodiments disclosed herein relate to a thermoset resin, including the reaction product of: an epoxy resin; dicyandiamide; and a phenolic hardener having the general formula: 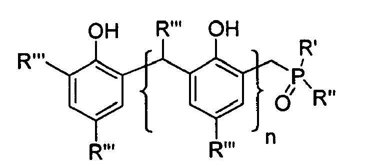 where R' and R" may be the same or different and each represents R- or RO-radicals, with R being an alkyl or aromatic radical; R"' is hydrogen, an alkyl or aromatic radical, -CH₂P(O)R'R", or -CH₂OR; n is a whole number within the range from 0 to 100.

In other aspects, embodiments disclosed herein relate to a process for forming a dicyandiamide hardener composition, the process including: admixing dicyandiamide and a phenolic hardener having the general formula: 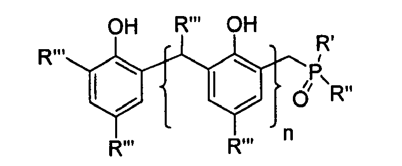 where R' and R" may be the same or different and each represents R- or RO- radicals, with R being an alkyl or aromatic radical; R"' is hydrogen, an alkyl or aromatic radical, -CH₂P(O)R'R", or -CH₂OR; n is a whole number within the range from 0 to 100.

In other aspects, embodiments disclosed herein relate to a process for forming a dicyandiamide-containing curable composition, the process including: admixing dicyandiamide and a phenolic hardener to form a hardener composition, wherein the phenolic hardener has the general formula: 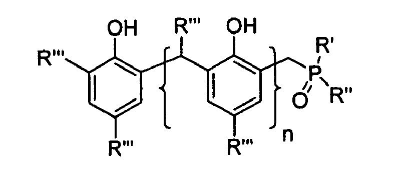 where R' and R" may be the same or different and each represents R- or RO- radicals, with R being an alkyl or aromatic radical; R"' is hydrogen, an alkyl or aromatic radical, -CH₂P(O)R'R", or -CH₂OR; n is a whole number within the range from 0 to 100; and admixing an epoxy resin with the hardener composition.

Other aspects and advantages will be apparent from the following description and the appended claims.

### DETAILED DESCRIPTION

In one aspect, embodiments disclosed herein relate to the elimination of toxic and high boiling solvents, such as DMF, NMP, and DMSO, in dicyandiamide curing formulations used in coatings, composites, and electrical laminate applications, for example. More specifically, embodiments disclosed herein relate to phenolic hardeners having the general formula: 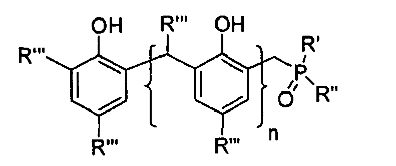 where R' and R" may be the same or different and each represents R- or RO- radicals, with R being an alkyl or aromatic radical; R"' is hydrogen, an alkyl or aromatic radical, -CH₂P(O)R'R", or -CH₂OR; n is a whole number within the range from 0 to 100.

In other aspects, embodiments disclosed herein relate to curable compositions and cured resins that are formed from such curable compositions. The curable compositions, for example, may include an admixture of the epoxy resin and the above described phenolic hardener.

The inventor has surprisingly found that it is possible to dissolve dicyandiamide in such phenolic hardeners without the use of DMF, DMSO, or NMP. These dicyandiamide solutions may be substantially homogeneous and may be blended directly into an epoxy resin solution to serve as a curing agent and a flame retardant. The resulting varnishes, prepregs, and laminates will not contain any DMF. Additionally, the glass transition temperature of the resulting cured resins may be increased compared to formulations containing DMF, for example, due to the absence of residual DMF in the prepreg and laminates.

In addition to the epoxy resin and the phosphorus-containing phenolic hardener, additional hardeners, catalysts, flame retardants, and other additives may also be used in compositions disclosed herein. Each of these is described in more detail below.

EPOXY RESINS

The epoxy resins used in embodiments disclosed herein may vary and include conventional and commercially available epoxy resins, which may be used alone or in combinations of two or more. In choosing epoxy resins for compositions disclosed herein, consideration should not only be given to properties of the final product, but also to viscosity and other properties that may influence the processing of the resin composition.

The epoxy resin component may be any type of epoxy resin, including any material containing one or more reactive oxirane groups, referred to herein as "epoxy groups" or "epoxy functionality." Epoxy resins useful in embodiments disclosed herein may include mono-functional epoxy resins, multi- or poly-functional epoxy resins, and combinations thereof. Monomeric and polymeric epoxy resins may be aliphatic, cycloaliphatic, aromatic, or heterocyclic epoxy resins. The polymeric epoxies include linear polymers having terminal epoxy groups (a diglycidyl ether of a polyoxyalkylene glycol, for example), polymer skeletal oxirane units (polybutadiene polyepoxide, for example) and polymers having pendant epoxy groups (such as a glycidyl methacrylate polymer or copolymer, for example). The epoxies may be pure compounds, but are generally mixtures or compounds containing one, two or more epoxy groups per molecule. In some embodiments, epoxy resins may also include reactive -OH groups, which may react at higher temperatures with anhydrides, organic acids, amino resins, phenolic resins, or with epoxy groups (when catalyzed) to result in additional crosslinking.

In general, the epoxy resins may be glycidated resins, cycloaliphatic resins, epoxidized oils, and so forth. The glycidated resins are frequently the reaction product of epichlorohydrin and a bisphenol compound, such as bisphenol A; C₄ to C₂₈ alkyl glycidyl ethers; C₂ to C₂₈ alkyl-and alkenyl-glycidyl esters; C₁ to C₂₈ alkyl-, mono- and poly-phenol glycidyl ethers; polyglycidyl ethers of polyvalent phenols, such as pyrocatechol, resorcinol, hydroquinone, 4,4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxydiphenyl methyl methane, 4,4'-dihydroxydiphenyl cyclohexane, 4,4'-dihydroxy-3,3'-dimethyldiphenyl propane, 4,4'-dihydroxydiphenyl sulfone, and tris(4-hydroxyphynyl)methane; polyglycidyl ethers of the chlorination and bromination products of the above-mentioned diphenols; polyglycidyl ethers of novolacs; polyglycidyl ethers of diphenols obtained by esterifying ethers of diphenols obtained by esterifying salts of an aromatic hydrocarboxylic acid with a dihaloalkane or dihalogen dialkyl ether; polyglycidyl ethers of polyphenols obtained by condensing phenols and long-chain halogen paraffins containing at least two halogen atoms. Other examples of epoxy resins useful in embodiments disclosed herein include bis-4,4'-(1-methylethylidene) phenol diglycidyl ether and (chloromethyl) oxirane Bisphenol A diglycidyl ether.

In some embodiments, the epoxy resin may include glycidyl ether type; glycidyl-ester type; alicyclic type; heterocyclic type, and halogenated epoxy resins, etc. Non-limiting examples of suitable epoxy resins may include cresol novolac epoxy resin, phenolic novolac epoxy resin, biphenyl epoxy resin, hydroquinone epoxy resin, stilbene epoxy resin, and mixtures and combinations thereof.

Suitable polyepoxy compounds may include resorcinol diglycidyl ether (1,3-bis-(2,3-epoxypropoxy)benzene), diglycidyl ether of bisphenol A (2,2-bis(p-(2,3-epoxypropoxy)phenyl)propane), triglycidyl p-aminophenol (4-(2,3-epoxypropoxy)-N,N-bis(2,3-epoxypropyl)aniline), diglycidyl ether of bromobisphenol A (2,2-bis(4-(2,3-epoxypropoxy)3-bromo-phenyl)propane), diglycidyl ether of Bisphenol F (2,2-bis(p-(2,3-epoxypropoxy)phenyl)methane), triglycidyl ether of meta- and/or para-aminophenol (3-(2,3-epoxypropoxy)N,N-bis(2,3-epoxypropyl)aniline), and tetraglycidyl methylene dianiline (N,N,N',N'-tetra(2,3-epoxypropyl) 4,4'-diaminodiphenyl methane), and mixtures of two or more polyepoxy compounds. A more exhaustive list of useful epoxy resins found may be found in Lee, H. and Neville, K., Handbook of Epoxy Resins, McGraw-Hill Book Company, 1982 reissue.

Other suitable epoxy resins include polyepoxy compounds based on aromatic amines and epichlorohydrin, such as N,N'-diglycidyl-aniline; N,N'-dimethyl-N,N'-diglycidyl-4,4'-diaminodiphenyl methane; N,N,N',N'-tetraglycidyl-4,4'-diaminodiphenyl methane; N-diglycidyl-4-aminophenyl glycidyl ether; and N,N,N',N'-tetraglycidyl-1,3-propylene bis-4-aminobenzoate. Epoxy resins may also include glycidyl derivatives of one or more of: aromatic diamines, aromatic monoprimary amines, aminophenols, polyhydric phenols, polyhydric alcohols, polycarboxylic acids.

Useful epoxy resins include, for example, polyglycidyl ethers of polyhydric polyols, such as ethylene glycol, triethylene glycol, 1,2-propylene glycol, 1,5-pentanediol, 1,2,6-hexanetriol, glycerol, and 2,2-bis(4-hydroxy cyclohexyl)propane; polyglycidyl ethers of aliphatic and aromatic polycarboxylic acids, such as, for example, oxalic acid, succinic acid, glutaric acid, terephthalic acid, 2,6-naphthalene dicarboxylic acid, and dimerized linoleic acid; polyglycidyl ethers of polyphenols, such as, for example, bis-phenol A, bis-phenol F, 1,1-bis(4-hydroxyphenyl)ethane, 1,1-bis(4-hydroxyphenyl)isobutane, and 1,5-dihydroxy naphthalene; modified epoxy resins with acrylate or urethane moieties; glycidylamine epoxy resins; and novolac resins.

The epoxy compounds may be cycloaliphatic or alicyclic epoxides. Examples of cycloaliphatic epoxides include diepoxides of cycloaliphatic esters of dicarboxylic acids such as bis(3,4-epoxycyclohexylmethyl)oxalate, bis(3,4-epoxycyclohexylmethyl)adipate, bis(3,4-epoxy-6-methylcyclohexylmethyl)adipate, bis(3,4-epoxycyclohexylmethyl)pimelate; vinylcyclohexene diepoxide; limonene diepoxide; dicyclopentadiene diepoxide; and the like. Other suitable diepoxides of cycloaliphatic esters of dicarboxylic acids are described, for example, in U.S. Patent No. 2,750,395.

Other cycloaliphatic epoxides include 3,4-epoxycyclohexylmethyl-3,4-epoxycyclohexane carboxylates such as 3,4-epoxycyclohexylmethyl-3,4-epoxycyclohexane carboxylate; 3,4-epoxy-1-methylcyclohexyl-methyl-3,4-epoxy-1-methylcyclohexane carboxylate; 6-methyl-3,4-epoxycyclohexylmethylmethyl-6-methyl-3,4-epoxycyclohexane carboxylate; 3,4-epoxy-2-methylcyclohexylmethyl-3,4-epoxy-2-methylcyclohexane carboxylate; 3,4-epoxy-3-methylcyclohexyl-methyl-3,4-epoxy-3-methylcyclohexane carboxylate; 3,4-epoxy-5-methylcyclohexyl-methyl-3,4-epoxy-5-methylcyclohexane carboxylate and the like. Other suitable 3,4-epoxycyclohexylmethyl-3,4-epoxycyclohexane carboxylates are described, for example, in U.S. Patent No. 2,890,194.

Further epoxy-containing materials which are particularly useful include those based on glycidyl ether monomers. Examples are di- or polyglycidyl ethers of polyhydric phenols obtained by reacting polyhydric phenol with an excess of chlorohydrin such as epichlorohydrin. Such polyhydric phenols include resorcinol, bis(4-hydroxyphenyl)methane (known as bisphenol F), 2,2-bis(4-hydroxyphenyl)propane (known as bisphenol A), 2,2-bis(4'-hydroxy-3',5'-dibromophenyl)propane, 1,1,2,2-tetrakis(4'-hydroxy-phenyl)ethane or condensates of phenols with formaldehyde that are obtained under acid conditions such as phenol novolacs and cresol novolacs. Examples of this type of epoxy resin are described in U.S. Patent No. 3,018,262. Other examples include di- or polyglycidyl ethers of polyhydric alcohols such as 1,4-butanediol, or polyalkylene glycols such as polypropylene glycol and di- or polyglycidyl ethers of cycloaliphatic polyols such as 2,2-bis(4-hydroxycyclohexyl)propane. Other examples are monofunctional resins such as cresyl glycidyl ether or butyl glycidyl ether.

Other classes of epoxy compounds include polyglycidyl esters and poly(beta-methylglycidyl) esters of polyvalent carboxylic acids such as phthalic acid, terephthalic acid, tetrahydrophthalic acid or hexahydrophthalic acid. A further class of epoxy compounds are N-glycidyl derivatives of amines, amides and heterocyclic nitrogen bases such as N,N-diglycidyl aniline, N,N-diglycidyl toluidine, N,N,N',N'-tetraglycidyl bis(4-aminophenyl)methane, triglycidyl isocyanurate, N,N'-diglycidyl ethyl urea, N,N'-diglycidyl-5,5-dimethylhydantoin, and N,N'-diglycidyl-5-isopropylhydantoin.

Still other epoxy-containing materials are copolymers of acrylic acid esters of glycidol such as glycidylacrylate and glycidylmethacrylate with one or more copolymerizable vinyl compounds. Examples of such copolymers are 1:1 styrene-glycidylmethacrylate, 1:1 methylmethacrylate-glycidylacrylate and a 62.5:24:13.5 methylmethacrylate-ethyl acrylate-glycidylmethacrylate.

Epoxy compounds that are readily available include octadecylene oxide; glycidylmethacrylate; diglycidyl ether of bisphenol A; D.E.R. 331, D.E.R.332 and D.E.R. 334 from The Dow Chemical Company, Midland, Michigan; vinylcyclohexene dioxide; 3,4-epoxycyclohexylmethyl-3,4-epoxycyclohexane carboxylate; 3,4-epoxy-6-methylcyclohexyl-methyl-3,4-epoxy-6-methylcyclohexane carboxylate; bis(3,4-epoxy-6-methylcyclohexylmethyl) adipate; bis(2,3-epoxycyclopentyl) ether; aliphatic epoxy modified with polypropylene glycol; dipentene dioxide; epoxidized polybutadiene; silicone resin containing epoxy functionality; flame retardant epoxy resins (such as a brominated bisphenol type epoxy resin available under the tradename D.E.R. 580, available from The Dow Chemical Company, Midland, Michigan); 1,4-butanediol diglycidyl ether of phenol-formaldehyde novolac (such as those available under the tradenames D.E.N. 431 and D.E.N. 438 available from The Dow Chemical Company, Midland, Michigan); and resorcinol diglycidyl ether Although not specifically mentioned, other epoxy resins under the tradename designations D.E.R. and D.E.N. available from the Dow Chemical Company may also be used. In some embodiments, epoxy resin compositions may include epoxy resins formed by reaction of a diglycidyl ether of bisphenol A with bisphenol A.

Other suitable epoxy resins are disclosed in U.S. Patent No. 5,112,932, which is incorporated herein by reference. Such epoxy resins may include epoxy terminated polyoxazolidone-containing compounds, including, for example, the reaction product of a polyepoxide compound with a polyisocyanate compound. Polyepoxides disclosed may include diglycidyl ether of 2,2-bis(4-hydroxyphenyl) propane (generally referred to as bisphenol A) and diglycidyl ether of 2,2-bis(3,5-dibromo-4-hydroxyphenyl) propane (generally referred to as tetrabromobisphenol A). Suitable polyisocyanates include 4,4'-methylene bis(phenylisocyanate) (MDI) and isomers thereof, higher functional homologs of MDI (commonly designated as "polymeric MDI"), toluene diisocyanate (TDI) such as 2,4-toluene diisocyanate and 2,6-toluene diisocyanate, m-xylylene diisocyanate, hexamethylene diisocyanate (HMDI) and isophoronediisocyanate.

Other suitable epoxy resins are disclosed in, for example, U.S. Patent Nos. 7,163,973, 6,887,574, 6,632,893, 6,242,083, 7,037,958, 6,572,971, 6,153,719, and 5,405,688, PCT Publication WO 2006/052727, and U.S. Patent Application Publication Nos. 20060293172 and 20050171237.

PHOSPHORUS-CONTAINING PHENOLIC HARDENER

As described above, dicyandiamide has poor solubility in common organic solvents, such as ketones and alcohols. Thus, polar solvents, such as dimethylformamide (DMF), N-methylpyrodinone (NMP), and dimethylsulfoxide (DMSO), are commonly used for applications in which dicyandiamide is used as a hardener.

In contrast, curable compositions disclosed herein include dicyandiamide as a hardener or curing agent, where the dicyandiamide is not used in conjunction with DMF, NMP, DMSO, or other solvents not suitable for applications where low residual solvents in prepregs are required.

Dicyandiamide hardener solutions disclosed herein may include dicyandiamide dissolved in a phosphorous-containing compound or a solution having a phosphorus-containing compound. In some embodiments, the phosphorus containing compound may include a compound having the general formula: 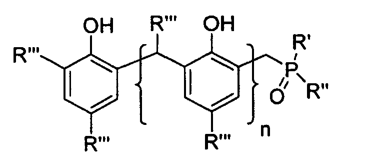 where R' and R" may be the same or different and each represents R- or RO- radicals, with R being an alkyl or aromatic radical; R"' is hydrogen, an alkyl or aromatic radical, -CH₂P(O)R'R", or -CH₂OR; n is a whole number within the range from 0 to 100.

Phosphorus-containing phenolic hardeners described above may include, for example, the reaction product of a resole and a phosphorous compound of the formula (I): 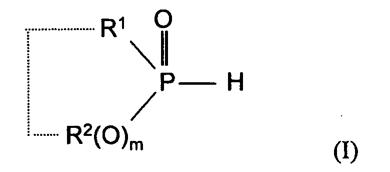 where R¹ and R² may be the same or different and each represents a linear or branched alkyl group having 1 to 8 carbon atoms, an alicyclic group having 5 to 6 carbon atoms in the ring, a substituted or unsubstituted aryl group having 6 to 10 carbon atoms, or R¹ and R² may form a 5 to 8 membered ring together with a phosphorous atom; m is an integer from 0 to 1. The active hydrogen is reacted with the resole to form the phosphorous-containing compound.

In selected embodiments, the phosphorus-containing phenolic hardener may include DOP-BN, a reaction product of DOP (9,10-dihydro-9-oxa-10-phosphaphenanthrene 10-oxide) and a resole. Other suitable phosphorus-containing phenolic hardeners may be formed by reaction of a resole and a phosphorus-containing compound such as those disclosed in PCT/US2005/017954.

Resoles are condensation products of phenols with an excess of aldehyde (typically formaldehyde or a formaldehyde precursor) under neutral or alkaline conditions (see Encyclopedia of Polymer Science and Technology, Vol. 7, "Phenolic Resins," John Wiley and Sons). Resoles are characterized as containing at least one aromatic ring to which at least one phenolic -OH group and one -CH₂OR side chain, where 'R' is hydrogen or an alkyl group. Resoles may include phenol-formaldehyde resole, cresol-formaldehyde resole, phenol formaldehyde resole, bisphenol F-formaldehyde resole, and bisphenol A-formaldehyde resole, among others. These dicyandiamide / phenolic hardener solutions may be substantially homogeneous and may be blended directly into an epoxy resin solution to serve as a curing agent and a flame retardant.

As an example, the reaction to form the phenolic hardeners described herein may be performed by blending different amounts of DOP (9,10-dihydro-9-oxa-10-phosphaphenanthrene-10-oxide) or other phosphorus-containing compounds described above and resoles together and heating the mixture to a sufficient temperature to initiate the reaction between the phosphorus compound and the resole. Generally, the reaction temperature is greater than 25°C, preferably greater than 150°C, and more preferably greater than 170°C. The reaction is preferably carried out for a period of time sufficient to a react the H-P=O, P-H, or P-OH moieties of Component (A) with the OR" moieties of Component (B). The time of reaction is typically from 30 minutes to 20 hours, preferably from 1 hour to 10 hours, and more preferably from 2 hours to 6 hours. The phosphorus-containing compound and the resole may be combined at a weight ratio in the range from 10:1 1 to 1:10 in some embodiments; from 5:1 to 1:5 in other embodiments; from 2:1 to 1:2 in other embodiments; and from 1.1:1 to 1:1.1 in yet other embodiments, based on total solids content of the composition.

Phenolic hardeners described herein may also include solvents, such as ketones, alcohols, and glycol ethers. Suitable alcohols may include, for example, propanol, butanols (i.e., isopropanol, butanol, isobutanol), and other alcohols. Glycol ethers, for example, may include propylene glycol methyl ether, available from The Dow Chemical Company, Midland, Michigan as DOWANOL PM. For example, in some embodiments, dicyandiamide may be dissolved in the above described phenolic hardener, such as DOP-BN. In other embodiments, dicyandiamide may be dissolved in a mixture of the phenolic hardener and DOWANOL PM. In yet other embodiments, dicyandiamide may be dissolved in a mixture of the phenolic hardener, butanol, and DOWANOL PM to form a storage-stable solution. Such solutions may be added to epoxy resin compositions to form stable curable formulation that may be used to form prepregs and electrical laminates, for example.

Dicyandiamide may be soluble in the above-described phenolic hardeners or solutions thereof at concentrations up to 35 weight percent or more in some embodiments, depending upon the concentrations of the phenolic hardener and solvents, such as a glycol ether, used in the solution. In other embodiments, dicyandiamide may be soluble in the phenolic hardener or solutions thereof up to concentrations up to 20 weight percent or more; up to 10 weight percent or more in other embodiments; up to 5 weight percent or more in other embodiments; and up to 3.5 weight percent or more in yet other embodiments. Such concentrations are sufficient for bromine free and dicyandiamide curing formulations.

In some embodiments, a hardener solution including the dicyandiamide and the phenolic hardener or solutions thereof may include 1 to 60 weight percent of the reaction product of 3,4,5,6-dibenzo-1,2-oxaphosphane-2-oxide and a resole; 1 to 20 weight percent of the dicyandiamide; and 5 to 30 weight percent of a solvent, such as an alcohol, a glycol ether, a ketone, or a combination thereof.

ADDITIONAL HARDENERS / CURING AGENTS

In addition to the dicyandiamide hardeners described above, additional hardeners or curing agents may also be provided for promoting crosslinking of the epoxy resin composition to form a polymer composition. As with the epoxy resins, the additional hardeners and curing agents may be used individually or as a mixture of two or more. The curing agent component (also referred to as a hardener or crosslinking agent) may include any compound having an active group being reactive with the epoxy group of the epoxy resin. The curing agents may include nitrogen-containing compounds such as amines and their derivatives; oxygen-containing compounds such as carboxylic acid terminated polyesters, anhydrides, phenol novolacs, bisphenol-A novolacs, DCPD-phenol condensation products, brominated phenolic oligomers, amino-formaldehyde condensation products, phenol, bisphenol A and cresol novolacs, phenolic- terminated epoxy resins; sulfur-containing compounds such as polysulfides, polymercaptans; and catalytic curing agents such tertiary amines, Lewis acids, Lewis bases and combinations of two or more of the above curing agents. Practically, polyamines, diaminodiphenylsulfone and their isomers, aminobenzoates, various acid anhydrides, phenol-novolac resins and cresol- novolac resins, for example, may be used, but the present disclosure is not restricted to the use of these compounds.

Other embodiments of cross-linkers that may be used are described in U.S. Patent No 6,613,839, and include, for example, copolymers of styrene and maleic anhydride having a molecular weight (M_{w}) in the range of from 1500 to 50,000 and an anhydride content of more than 15 percent.

Other components that may be useful in the compositions disclosed herein include curing catalysts. Examples of curing catalyst include imidazole derivatives, tertiary amines, and organic metallic salts. Other examples of such curing catalysts include free radical initiators, such as azo compounds including azoisobutyronitrile, and organic peroxides, such as tertiary-butyl perbenzoate, tertiary-butyl peroctoate, and benzoyl peroxide; methyl ethyl ketone peroxide, acetoacetic peroxide, cumene hydroperoxide, cyclohexanone hydroperoxide, dicumyl peroxide, and mixtures thereof. Methyl ethyl ketone peroxide and benzoyl peroxide are preferably used in the present invention.

In some embodiments, curing agents may include primary and secondary polyamines and their adducts, anhydrides, and polyamides. For example, polyfunctional amines may include aliphatic amine compounds such as diethylene triamine (D.E.H. 20, available from The Dow Chemical Company, Midland, Michigan), triethylene tetramine (D.E.H. 24, available from The Dow Chemical Company, Midland, Michigan), tetraethylene pentamine (D.E.H. 26, available from The Dow Chemical Company, Midland, Michigan), as well as adducts of the above amines with epoxy resins, diluents, or other amine-reactive compounds. Aromatic amines, such as metaphenylene diamine and diamine diphenyl sulfone, aliphatic polyamines, such as amino ethyl piperazine and polyethylene polyamine, and aromatic polyamines, such as metaphenylene diamine, diamino diphenyl sulfone, and diethyltoluene diamine, may also be used.

Anhydride curing agents may include, for example, nadic methyl anhydride, hexahydrophthalic anhydride, trimellitic anhydride, dodecenyl succinic anhydride, phthalic anhydride, methyl hexahydrophthalic anhydride, tetrahydrophthalic anhydride, and methyl tetrahydrophthalic anhydride, among others. Anhydride curing agents may also include copolymers of styrene and maleic acid anhydrides and other anhydrides as described in U.S. Patent No. 6,613,839.

In some embodiments, the phenol novolac hardener may contain a biphenyl or naphthyl moiety. The phenolic hydroxy groups may be attached to the biphenyl or naphthyl moiety of the compound. This type of hardener may be prepared, for example, according to the methods described in EP915118A1. For example, a hardener containing a biphenyl moiety may be prepared by reacting phenol with bismethoxy-methylene biphenyl.

In other embodiments, curing agents may include boron trifluoride monoethylamine, and diaminocyclohexane. Curing agents may also include imidazoles, their salts, and adducts. These epoxy curing agents are typically solid at room temperature. One example of suitable imidazole curing agents includes 2-phenylimidazole; other suitable imidazole curing agents are disclosed in EP906927A1. Other curing agents include aromatic amines, aliphatic amines, anhydrides, and phenols.

In some embodiments, the curing agents may be an amino compound having a molecular weight up to 500 per amino group, such as an aromatic amine or a guanidine derivative. Examples of amino curing agents include 4-chlorophenyl-N,N-dimethyl-urea and 3,4-dichlorophenyl-N,N-dimethyl-urea.

Other examples of curing agents useful in embodiments disclosed herein include: 3,3'- and 4,4'-diaminodiphenylsulfone; methylenedianiline; bis(4-amino-3,5-dimethylphenyl)-1,4-diisopropylbenzene available as EPON 1062 from Shell Chemical Co.; and bis(4-aminophenyl)-1,4-diisopropylbenzene available as EPON 1061 from Shell Chemical Co.

Thiol curing agents for epoxy compounds may also be used, and are described, for example, in U.S. Patent No. 5,374,668. As used herein, "thiol" also includes polythiol or polymercaptan curing agents. Illustrative thiols include aliphatic thiols such as methanedithiol, propanedithiol, cyclohexanedithiol, 2-mercaptoethyl-2,3-dimercaptosuccinate, 2,3-dimercapto-1-propanol(2-mercaptoacetate), diethylene glycol bis(2-mercaptoacetate), 1,2-dimercaptopropyl methyl ether, bis(2-mercaptoethyl)ether, trimethylolpropane tris(thioglycolate), pentaerythritol tetra(mercaptopropionate), pentaerythritol tetra(thioglycolate), ethyleneglycol dithioglycolate, trimethylolpropane tris(beta-thiopropionate), tris-mercaptan derivative of tri-glycidyl ether of propoxylated alkane, and dipentaerythritol poly(beta-thiopropionate); halogen-substituted derivatives of the aliphatic thiols; aromatic thiols such as di-, tris- or tetra-mercaptobenzene, bis-, tris- or tetra-(mercaptoalkyl)benzene, dimercaptobiphenyl, toluenedithiol and naphthalenedithiol; halogen-substituted derivatives of the aromatic thiols; heterocyclic ring-containing thiols such as amino-4,6-dithiol-sym-triazine, alkoxy-4,6-dithiol-sym-triazine, aryloxy-4,6-dithiol-sym-triazine and 1,3,5-tris(3-mercaptopropyl) isocyanurate; halogen-substituted derivatives of the heterocyclic ring-containing thiols; thiol compounds having at least two mercapto groups and containing sulfur atoms in addition to the mercapto groups such as bis-, tris- or tetra(mercaptoalkylthio)benzene, bis-, tris- or tetra(mercaptoalkylthio)alkane, bis(mercaptoalkyl) disulfide, hydroxyalkylsulfidebis(mercaptopropionate), hydroxyalkylsulfidebis(mercaptoacetate), mercaptoethyl ether bis(mercaptopropionate), 1,4-dithian-2,5-diolbis(mercaptoacetate), thiodiglycolic acid bis(mercaptoalkyl ester), thiodipropionic acid bis(2-mercaptoalkyl ester), 4,4-thiobutyric acid bis(2-mercaptoalkyl ester), 3,4-thiophenedithiol, bismuththiol and 2,5-dimercapto-1,3,4-thiadiazol.

The curing agent may also be a nucleophilic substance such as an amine, a tertiary phosphine, a quaternary ammonium salt with a nucleophilic anion, a quaternary phosphonium salt with a nucleophilic anion, an imidazole, a tertiary arsenium salt with a nucleophilic anion, and a tertiary sulfonium salt with a nucleophilic anion.

Aliphatic polyamines that are modified by adduction with epoxy resins, acrylonitrile, or (meth)acrylates may also be utilized as curing agents. In addition, various Mannich bases can be used. Aromatic amines wherein the amine groups are directly attached to the aromatic ring may also be used.

Quaternary ammonium salts with a nucleophilic anion useful as a curing agent in embodiments disclosed herein may include tetraethyl ammonium chloride, tetrapropyl ammonium acetate, hexyl trimethyl ammonium bromide, benzyl trimethyl ammonium cyanide, cetyl triethyl ammonium azide, N,N-dimethylpyrolidinium cyanate, N-methylpyridinium phenolate, N-methyl-o-chloropyridinium chloride, methyl viologen dichloride and the like.

In some embodiments, at least one cationic photoinitiator may be used. Cationic photoinitiators include compounds that decompose when exposed to electromagnetic radiation of a particular wavelength or range of wavelengths to form a cationic species that may catalyze the polymerization reaction, such as between an epoxide group and a hydroxyl group. That cationic species may also catalyze the reaction of epoxide groups with other epoxide-reactive species contained in the curable composition (such as other hydroxyl groups, amine groups, phenolic groups, mercaptan groups, anhydride groups, carboxylic acid groups and the like). Examples of cationic photoinitiators include diaryliodonium salts and triarylsulfonium salts. For example, a diaryliodonium salt type of photoinitiator is available from Ciba-Geigy under the trade designation IRGACURE 250. A triarylsulfonium-type photoinitiator is available from The Dow Chemical Company as CYRACURE 6992. The cationic photoinitiator may be used in a catalytically effective amount, and may constitute up to about 10 weight percent of the curable composition

CATALYSTS

In some embodiments, a catalyst may be used to promote the reaction between the epoxy resin component and the curing agent or hardener, including dicyandiamide and the phenolic hardener described above. Catalysts may include a Lewis acid, for example boron trifluoride, conveniently as a derivative with an amine such as piperidine or methyl ethylamine. Catalysts may also be basic, such as, for example, an imidazole or an amine. Other catalysts may include other metal halide Lewis acids, including stannic chloride, zinc chloride, and the like, metal carboxylate-salts, such as stannous octoate and the like; benzyl dimethylamine; dimethyl aminomethyl phenol; and amines, such as triethylamine, imidazole derivatives, and the like.

Tertiary amine catalysts are described, for example, in U.S. Patent No. 5,385,990, incorporated herein by reference. Illustrative tertiary amines include methyldiethanolamine, triethanolamine, diethylaminopropylamine, benzyldimethyl amine, m-xylylenedi(dimethylamine), N,N'-dimethylpiperazine, N-methylpyrolidine, N-methyl hydroxypiperidine, N,N,NN'-tetramethyldiaminoethane, N,N,N',N',N'-pentamethyldiethylenetriamine, tributyl amine, trimethyl amine, diethyldecyl amine, triethylene diamine, N-methyl morpholine, N,N,N'N'-tetramethyl propane diamine, N-methyl piperidine, N,N'-dimethyl-1,3-(4-piperidino)propane, pyridine and the like. Other tertiary amines include 1,8-diazobicyclo[5.4.0]undec-7-ene, 1,8-diazabicyclo[2.2.2]octane, 4-dimethylaminopyridine, 4-(N-pyrolidino)pyridine, triethyl amine and 2,4,6-tris(dimethylaminomethyl)phenol.

FLAME RETARDANT ADDITIVES

As described above, the resin compositions described herein may be used in formulations that contain brominated and non-brominated flame retardants. Specific examples of brominated additives include tetrabromobisphenol A (TBBA) and materials derived therefrom: TBBA-diglycidyl ether, reaction products of bisphenol A or TBBA with TBBA-diglycidyl ether, and reaction products of bisphenol A diglycidyl ether with TBBA.

Non-brominated flame retardants include the various materials derived from DOP (9,10-dihydro-9-oxa-10-phosphaphenanthrene 10-oxide) such as DOP-hydroquinone (10-(2',5'-dihydroxyphenyl)-9,10-dihydro-9-oxa-10-phosphaphenanthrene 10-oxide), condensation products of DOP with glycidyl ether derivatives of novolacs, and inorganic flame retardants such as aluminum trihydrate and aluminum phosphinite.

OPTIONAL ADDITIVES

Curable and thermoset compositions disclosed herein may optionally include conventional additives and fillers. Additives and fillers may include, for example, other flame retardants, boric acid, silica, glass, talc, metal powders, titanium dioxide, wetting agents, pigments, coloring agents, mold release agents, coupling agents, ion scavengers, UV stabilizers, flexibilizing agents, toughening agents, and tackifying agents. Additives and fillers may also include fumed silica, aggregates such as glass beads, polytetrafluoroethylene, polyol resins, polyester resins, phenolic resins, graphite, molybdenum disulfide, abrasive pigments, viscosity reducing agents, boron nitride, mica, nucleating agents, and stabilizers, among others. Fillers and modifiers may be preheated to drive off moisture prior to addition to the epoxy resin composition. Additionally, these optional additives may have an effect on the properties of the composition, before and/or after curing, and should be taken into account when formulating the composition and the desired reaction product. Curable compositions disclosed herein may also optionally contain other additives of a generally conventional type including for example, stabilizers, other organic or inorganic additives, pigments, wetting agents, flow modifiers, UV light blockers, and fluorescent additives. These additives may be present in amounts of from 0 to 5 weight- percent in some embodiments, and less than 3 weight percent in other embodiments. Examples of suitable additives are also described in U.S. Patent No. 5,066,735 and PCT/US2005/017954.

Organic solvents may be used in some embodiments, including ketones, such as methyl ethyl ketone (MEK), glycol ethers, such as propylene glycol methyl ether, and alcohols, such as methanol. In some embodiments, minor amounts of higher molecular weight, relatively non-volatile monoalcohols, polyols, and other epoxy- or isocyanato-reactive diluents may also be used, if desired, to serve as plasticizers in the curable and thermoset compositions disclosed herein.

CURABLE COMPOSITIONS

Hardener compositions may be formed by combining a phosphorus-containing phenolic hardener or solution thereof with dicyandiamide, as described above. Curable compositions described herein may be formed by combining an epoxy resin and the hardener composition, along with additional hardeners, additives, catalysts, and other optional components. For example, in some embodiments, a curable composition may be formed by admixing an epoxy resin composition and a dicyandiamide hardener composition, without a catalyst, to form a mixture. The proportions of the epoxy resin and the hardener may depend, in part, upon the properties desired in the curable composition or cured compositions to be produced, the desired cure response of the composition, and the desired storage stability of the composition (desired shelf life). In other embodiments, a process to form a curable composition may include one or more of the steps of forming an epoxy resin or prepolymer composition, admixing a dicyandiamide hardener, admixing additional hardeners or catalysts, admixing a flame retardant, and admixing additives.

In some embodiments, the epoxy resin may be present in the curable composition in an amount ranging from 0.1 to 99 weight percent of the curable composition. In other embodiments, the epoxy composition may range from 0.1 to 50 weight percent of the curable composition; from 15 to 45 weight percent in other embodiments; and from 25 to 40 weight percent in yet other embodiments. In other embodiments, the epoxy composition may range from 30 to 99 weight percent of the curable composition; from 50 to 99 weight percent in other embodiments; from 60 to 95 weight percent in other embodiments; and from 70 to 90 weight percent in yet other embodiments.

In some embodiments, curable compositions may include from about 30 to about 98 volume percent epoxy resin. In other embodiments, curable compositions may include 65 to 95 volume percent epoxy resin; from 70 to 90 volume percent epoxy resin in other embodiments; from 30 to 65 volume percent epoxy resin in other embodiments; and from 40 to 60 volume percent epoxy resin in yet other embodiments.

In some embodiments, dicyandiamide - phenolic hardener mixture may be present in the curable composition in an amount ranging from 0.01 weight percent to 60 weight percent. In other embodiments, the dicyandiamide hardener solutions may be present in an amount ranging from 0.1 weight percent to 55 weight percent; from 0.5 weight percent to 50 weight percent in other embodiments; and from 1 to 45 weight percent in yet other embodiments.

In some embodiments, a catalyst may be present in the curable composition in an amount ranging from 0.01 weight percent to 10 weight percent. In other embodiments, the catalyst may be present in an amount ranging from 0.1 weight percent to 8 weight percent; from 0.5 weight percent to 6 weight percent in other embodiments; and from 1 to 4 weight percent in yet other embodiments.

In a class of embodiments, curable composition described herein may include: 30 to 99 weight percent of an epoxy resin, 0.01 to 5 weight percent dicyandiamide; 1 to 40 weight percent of the phosphorus-containing phenolic hardener; and 0 to 30 weight percent of a solvent comprising at least one of an alcohol, a ketone, and a glycol ether; wherein the weight percentages given are based on the combined weight of the phenolic hardener, the dicyandiamide, the epoxy resin, and the solvent.

In some embodiments, additional hardeners may also be admixed with the epoxy compositions described herein. Variables to consider in selecting additional hardeners and an amount of the additional hardener may include, for example, properties of the resin composition, the desired properties of the cured composition (flexibility, electrical properties, etc.), desired cure rates, as well as the number of reactive groups per hardener molecule, such as the number of active hydrogens in an amine. The amount of additional hardener used may vary from 0.1 to 150 parts per hundred parts resin composition, by weight, in some embodiments. In other embodiments, the additional hardener may be used in an amount ranging from 1 to 95 parts per hundred parts resin composition, by weight; the hardener may be used in an amount ranging from 2.5 to 90 parts per hundred parts resin composition, by weight, in other embodiments; and from 5 to 85 parts per hundred parts resin composition, by weight, in yet other embodiments.

Curable compositions may also include from about 0.1 to about 50 volume percent optional additives in some embodiments. In other embodiments, curable compositions may include from about 0.1 to about 5 volume percent optional additives; and from about 0.5 to about 2.5 volume percent optional additives in yet other embodiments.

SUBSTRATES

The curable compositions described above may be disposed on a substrate and cured. The substrate is not subject to particular limitation. As such, substrates may include metals, such as stainless steel, iron, steel, copper, zinc, tin, aluminum, alumite and the like; alloys of such metals, and sheets which are plated with such metals and laminated sheets of such metals. Substrates may also include polymers, glass, and various fibers, such as, for example, carbon/graphite; boron; quartz; aluminum oxide; glass such as E glass, S glass, S-2 GLASS^{®} or C glass; and silicon carbide or silicon carbide fibers containing titanium. Commercially available fibers may include: organic fibers, such as KEVLAR from DuPont; aluminum oxide-containing fibers, such as NEXTEL fibers from 3M; silicon carbide fibers, such as NICALON from Nippon Carbon; and silicon carbide fibers containing titanium, such as TYRRANO from Ube. In particular embodiments, the curable compositions may be used to form at least a portion of a circuit board or a printed circuit board. In some embodiments, the substrate may be coated with a compatibilizer to improve the adhesion of the curable or cured composition to the substrate.

COMPOSITES AND COATED STRUCTURES

In some embodiments, composites may be formed by curing the curable compositions disclosed herein. In other embodiments, composites may be formed by applying a curable composition to a substrate or a reinforcing material, such as by impregnating or coating the substrate or reinforcing material, and curing the curable composition.

The above described curable compositions may be in the form of a powder, slurry, or a liquid. After a curable composition has been produced, as described above, it may be disposed on, in, or between the above described substrates, before, during, or after cure of the curable composition.

For example, a composite may be formed by coating a substrate with a curable composition. Coating may be performed by various procedures, including spray coating, curtain flow coating, coating with a roll coater or a gravure coater, brush coating, and dipping or immersion coating.

In various embodiments, the substrate may be monolayer or multi-layer. For example, the substrate may be a composite of two alloys, a multi-layered polymeric article, and a metal-coated polymer, among others, for example. In other various embodiments, one or more layers of the curable composition may be disposed on or in a substrate. Other multi-layer composites, formed by various combinations of substrate layers and curable composition layers are also envisaged herein.

In some embodiments, the heating of the curable composition may be localized, such as to avoid overheating of a temperature-sensitive substrate, for example. In other embodiments, the heating may include heating the substrate and the curable composition.

Curing of the curable compositions disclosed herein may require a temperature of at least about 30°C, up to about 250°C, for periods of minutes up to hours, depending on the resin composition, hardener, and catalyst, if used. In other embodiments, curing may occur at a temperature of at least 100°C, for periods of minutes up to hours. Post-treatments may be used as well, such post-treatments ordinarily being at temperatures between about 100°C and 200°C.

In some embodiments, curing may be staged to prevent exotherms. Staging, for example, includes curing for a period of time at a temperature followed by curing for a period of time at a higher temperature. Staged curing may include two or more curing stages, and may commence at temperatures below about 180°C in some embodiments, and below about 150°C in other embodiments.

In some embodiments, curing temperatures may range from a lower limit of 30°C, 40°C, 50°C, 60°C, 70°C, 80°C, 90°C, 100°C, 110°C, 120°C, 130°C, 140°C, 150°C, 160°C, 170°C, or 180°C to an upper limit of 250°C, 240°C, 230°C, 220°C, 210°C, 200°C, 190°C, 180°C, 170°C, 160°C, where the range may be from any lower limit to any upper limit.

The curable compositions and composites described herein may be useful as adhesives, structural and electrical laminates, coatings, castings, structures for the aerospace industry, and as circuit boards and the like for the electronics industry, among other applications. The curable compositions disclosed herein may also be used in electrical varnishes, encapsulants, semiconductors, general molding powders, filament wound pipe, storage tanks, liners for pumps, and corrosion resistant coatings, among others. In selected embodiments, the curable compositions described herein may be useful in the formation of resin coated foils, similar to those as described in U.S. Patent No. 6,432,541.

Various processing techniques can be used to form composites containing the epoxy-based compositions disclosed herein. For example, filament winding, solvent prepregging, and pultrusion are typical processing techniques in which the uncured epoxy resin may be used. Moreover, fibers in the form of bundles may be coated with the uncured epoxy resin composition, laid up as by filament winding, and cured to form a composite.

The epoxy resin compositions and composites described herein may be useful as adhesives, structural and electrical laminates, coatings, castings, structures for the aerospace industry, as circuit boards and the like for the electronics industry, as well as for the formation of skis, ski poles, fishing rods, and other outdoor sports equipment. The epoxy compositions disclosed herein may also be used in electrical varnishes, encapsulants, semiconductors, general molding powders, filament wound pipe, storage tanks, liners for pumps, and corrosion resistant coatings, among others.

EXAMPLES

Sample 1

A phosphorus-containing phenolic hardener solution is produced as follows. 580 g of DOP (9,10-dihydro-9-oxa-10-phosphaphenanthrene 10-oxide) and 560 g of PHENODUR PR 411 are mixed together and are charged to a 1-liter glass reactor equipped with a mechanical stirrer and a heating jacket, and fitted with a nitrogen gas inlet, a condenser and a solvent collector. The mixture is heated step-wise from room temperature to about 150°C to allow controllable evaporation of butanol, which is collected in the solvent collector. The reaction mixture is then kept at 150°C for about 5 hours. The collected condensate (butanol) and DOWANOL PM are added slowly to the reactor to cool the reactor contents to about 60°C and to dilute the reaction mixture to about 55 weight percent solids.

Hardener solution A is prepared by dissolving 2.4 parts of dicyandiamide in 66.9 parts of the phenolic hardener solution at a temperature of 40°C. The mixture is agitated for at least 60 minutes at 60°C until a homogeneous solution is obtained. The solution is then cooled to room temperature, resulting in a clear, homogeneous solution.

A curable composition is then formed by blending 69.3 parts of hardener solution A with 3.15 parts of a boric acid solution (20 weight percent boric acid in methanol), 8 parts of a 2-phenylimidazole solution (20 weight percent solid in methanol) and 74.6 parts of a phenol epoxy novolac (85 weight percent D.E.N.^{®} 438, 15 weight percent DOWANOL PM) at room temperature for 2 hours, resulting in a homogeneous solution. The gel time of the resulting curable composition at 170°C is 214 seconds, as determined by a stroke cure method on a 171°C hot plate based on IPC method IPC-TM-650 2.3.18.

Comparative Sample 1

Hardener solution B is prepared by dissolving 2.4 parts of dicyandiamide in 9.6 parts of dimethylformamide (DMF) at a temperature of 40°C. The mixture is agitated for 30 minutes at temperature, and cooled, resulting in a clear, homogeneous solution, having 20 weight percent solids content, at room temperature.

A curable composition is then formed by blending 12 parts of hardener solution B with 3.15 parts of a boric acid solution (20 weight percent boric acid in methanol), 8 parts of a 2-phenylimidazole solution (20 weight percent solid in methanol) and 74.6 parts of a phenol epoxy novolac (85 weight percent D.E.N.^{®} 438, 15 weight percent DOWANOL PM) at room temperature for 2 hours, resulting in a homogeneous solution. The gel time of the resulting curable composition at 170°C is 233 seconds.

Various properties of the curable compositions (Sample 1 and Comparative Sample 1) and laminates produced from the curable compositions are measured, including prepreg gel time, minimum melt viscosity, glass transition temperature (T_{g}), degradation temperature (T_{d}), T 288, and UL 94 rating. Laminates are produced by pressing 8 layers of prepregs with 2 outer layers of copper foil at 200°C for 90 minutes.

Glass transition temperature is measured using differential scanning calorimetry (DSC) using IPC Method IPC-TM-650 2.4.25. Degradation temperature is measured using thermal gravimetric analysis (TGA), where the degradation temperature is recorded at 5% weight loss of the sample according to IPC Method IPC-TM-650 2.4.24.6, using a thermo-gravimetric analyzer (TGA). The T288 is the minimum time required for the laminate at 288°C to degrade, and is measured according to IPC Method IPC-TM-650 2.4.24.1 using Thermo-mechanical Analyzer (TMA) at 10°C/min in air. The melt viscosity is measured according to the ASTM D445 method using an Ebrecht cone and plate viscometer. The properties of the curable compositions are compared in Table 1.

**Table 1**

| | Sample 1 | Comparative Sample 1 |
|---|---|---|
| Prepreg gel time, seconds | 110 | 186 |
| Minimum Melt Viscosity measured at 140°C, Pa·s | 146 | 3 |
| Laminate Performance | | |
| T_{g}, °C | 180 | 175 |
| T_{d} at 5% weight loss, °C | 373 | 373 |
| T 288, minutes | > 60 | > 60 |
| UL 94 | Vo | Vo |

As illustrated by the results in Table 1, curable compositions having acceptable properties may be formed using dicyandiamide without DMF. In addition, laminates formed from Sample 1 have a higher glass transition temperature than Sample 2, possibly resulting from residual DMF solvent in the prepreg, resulting in a plasticizing effect in the cured composition.

As described above, epoxy resin compositions disclosed herein may include dicyandiamide as a curing agent, where the solvent used for the dicyandiamide includes a phosphorus-containing phenolic hardener or a solution of a phosphorus-containing phenolic hardener. Such epoxy resin compositions may provide an alternative to using solvents such as DMF, NMP, DMSO, and other toxic solvent, high boiling point solvents, or other solvents not suitable for use in applications where low residual solvent is desired. These epoxy resin compositions may be used to form curable compositions and thermoset compositions, such as for use in electrical laminates, coatings, composites, electronics encapsulation, and in circuit boards, among other applications. Advantageously, embodiments disclosed herein may provide for DMF-free thermoset compositions, formed from the resin compositions, where the thermoset composition has both a high decomposition temperature and a high glass transition temperature. Additionally, the resin compositions may have a viscosity that minimizes at least one of voids, poor fiber wetting, and poor prepreg appearance when used as a coating, filler, etc.

## Claims

1. A substantially homogeneous solution, comprising:
dicyandiamide; and
a phenolic hardener having the general formula: 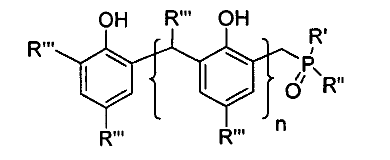 where R' and R" may be the same or different and each represents R- or RO-radicals, with R being an alkyl or aromatic radical; R"' is hydrogen, an alkyl or aromatic radical, -CH₂P(O)R'R", or -CH₂OR; n is a whole number within the range from 0 to 100.

2. The solution of claim 1 further comprising a solvent comprising at least one of an alcohol, a ketone, and a glycol ether.

3. The solution of claim 2, wherein the alcohol comprises a butanol.

4. The solution of any one of claims 2-3, wherein the ketone comprises methyl ethyl ketone.

5. The solution of any one of claims 2-4, wherein the glycol ether comprises propylene glycol methyl ether.

6. The solution of any one of claims 1-5, further comprising an imidazole catalyst.

7. The solution of any one of claims 1-6, further comprising at least one additional hardener selected from the group consisting of a phenol novolac, a bisphenol A novolac, and a cresol novolac.

8. The solution of any one of claims 2-7, wherein the solution comprises:
1 to 60 weight percent of the phenolic hardener;
1 to 20 weight percent of the dicyandiamide; and
5 to 30 weight percent of the solvent;
wherein the weight percentages given are based on the combined weight of the phenolic hardener, the dicyandiamide, and the solvent.

9. A curable composition, comprising the solution of claim 1 and an epoxy resin.

10. The curable composition of claim 9, wherein the composition comprises:
30 to 99 weight percent of the epoxy resin,
0.01 to 5 weight percent of the dicyandiamide;
1 to 40 weight percent of the phenolic hardener; and
0 to 30 weight percent of a solvent comprising at least one of an alcohol, a ketone, and a glycol ether;
wherein the weight percentages given are based on the combined weight of the phenolic hardener, the dicyandiamide, the epoxy resin, and the solvent.

11. The composition of any one of claims 9-10, wherein the epoxy resin comprises an epoxy terminated-polyoxazolidone-containing compound.

12. The composition of claim 11, wherein the epoxy terminated polyoxazolidone-containing compound comprises a reaction product of a polyepoxide compound and a polyisocyanate compound.

13. A process for forming a dicyandiamide hardener composition, comprising:
admixing dicyandiamide and a phenolic hardener having the general formula: 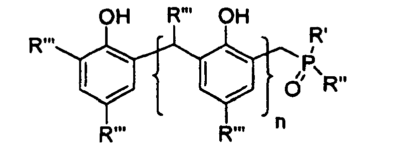 where R' and R" may be the same or different and each represents R- or RO-radicals, with R being an alkyl or aromatic radical; R"' is hydrogen, an alkyl or aromatic radical, -CH₂P(O)R'R", or -CH₂OR; n is a whole number within the range from 0 to 100.

14. The process of claim 13, further comprising admixing a solvent comprising at least one of an alcohol, a ketone, and a glycol ether with at least one of the dicyandiamide and the phenolic hardener.

15. A process for forming a dicyandiamide-containing curable composition, comprising:
admixing dicyandiamide and a phenolic hardener to form a hardener composition,
wherein the phenolic hardener has the general formula: 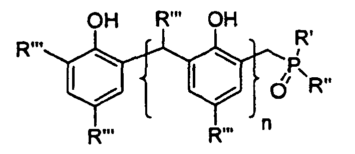
where R' and R" may be the same or different and each represents R- or RO-radicals, with R being an alkyl or aromatic radical; R"' is hydrogen, an alkyl or aromatic radical, -CH₂P(O)R'R", or -CH₂OR; n is a whole number within the range from 0 to 100; and
admixing an epoxy resin with the hardener composition.

## Patentansprüche

1. Im Wesentlichen homogene Lösung, die Folgendes umfasst:
Dicyandiamid; und
einen phenolischen Härter mit der allgemeinen Formel: 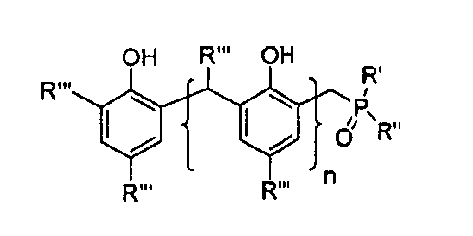 wo R' und R" gleich oder verschieden sein können und jeweils R- oder RO-Reste repräsentieren, wobei R ein Alkylrest oder aromatischer Rest ist; R'" ist Wasserstoff, ein Alkylrest oder aromatischer Rest, -CH₂P(O)R'R" oder -CH₂OR; n ist eine ganze Zahl im Bereich von 0 bis 100.

2. Lösung nach Anspruch 1, die ferner ein Lösungsmittel umfasst, das mindestens eines von einem Alkohol, einem Keton und einem Glycolether umfasst.

3. Lösung nach Anspruch 2, wobei der Alkohol ein Butanol umfasst.

4. Lösung nach einem der Ansprüche 2-3, wobei das Keton Methylethylketon umfasst.

5. Lösung nach einem der Ansprüche 2-4, wobei der Glycolether Propylenglycolmethylether umfasst.

6. Lösung nach einem der Ansprüche 1-5, die ferner einen Imidazolkatalysator umfasst.

7. Lösung nach einem der Ansprüche 1-6, die ferner mindestens einen zusätzlichen Härter umfasst, der aus der aus einem Phenol-Novolak, einem Bisphenol-A-Novolak und einem Kresol-Novolak bestehenden Gruppe ausgewählt ist.

8. Lösung nach einem der Ansprüche 2-7, wobei die Lösung Folgendes umfasst:
1 bis 60 Gew.-% des phenolischen Härters;
1 bis 20 Gew.-% des Dicyandiamids; und
5 bis 30 Gew.-% des Lösungsmittels;
wobei die angegebenen Gewichtsprozentsätze auf das kombinierte Gewicht des phenolischen Härters, des Dicyandiamids und des Lösungsmittels bezogen sind.

9. Härtbare Zusammensetzung, welche die Lösung nach Anspruch 1 und ein Epoxidharz umfasst.

10. Härtbare Zusammensetzung nach Anspruch 9, wobei die Zusammensetzung Folgendes umfasst:
30 bis 99 Gew.-% des Epoxidharzes;
0,01 bis 5 Gew.-% des Dicyandiamids;
1 bis 40 Gew.-% des phenolischen Härters; und
0 bis 30 Gew.-% eines Lösungsmittels, das mindestens eines von einem Alkohol, einem Keton und einem Glycolether umfasst;
wobei die angegebenen Gewichtsprozentsätze auf das kombinierte Gewicht des phenolischen Härters, des Dicyandiamids, des Epoxidharzes und des Lösungsmittels bezogen sind.

11. Zusammensetzung nach einem der Ansprüche 9-10, wobei das Epoxidharz eine epoxidterminierte polyoxazolidonhaltige Verbindung umfasst.

12. Zusammensetzung nach Anspruch 11, wobei die epoxidterminierte polyoxazolidonhaltige Verbindung ein Reaktionsprodukt von einer Polyepoxidverbindung und einer Polyisocyanatverbindung umfasst.

13. Verfahren zur Bildung einer Dicyandiamid-Härterzusammensetzung, mit den folgenden Schritten:
Mischen von Dicyandiamid und einem phenolischen Härter mit der allgemeinen Formel: 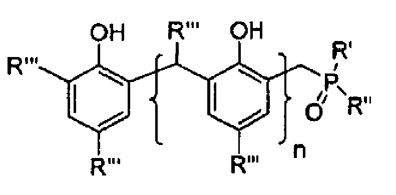 wo R' und R" gleich oder verschieden sein können und jeweils R- oder RO-Reste repräsentieren, wobei R ein Alkylrest oder aromatischer Rest ist; R'" ist Wasserstoff, ein Alkylrest oder aromatischer Rest, -CH₂P(O)R'R" oder -CH₂OR; n ist eine ganze Zahl im Bereich von 0 bis 100.

14. Verfahren nach Anspruch 13, bei dem ferner ein Lösungsmittel, das mindestens eines von einem Alkohol, einem Keton und einem Glycolether umfasst, mit mindestens einem von dem Dicyandiamid und dem phenolischen Härter gemischt wird.

15. Verfahren zur Bildung einer dicyandiamidhaltigen härtbaren Zusammensetzung, mit den folgenden Schritten:
Mischen von Dicyandiamid und einem phenolischen Härter, um eine Härterzusammensetzung zu bilden, wobei der phenolische Härter die folgende allgemeine Formel besitzt: 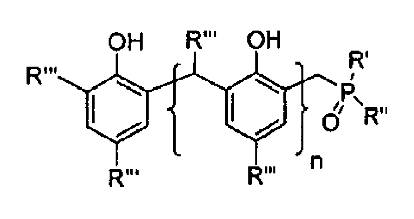 wo R' und R" gleich oder verschieden sein können und jeweils R- oder RO-Reste repräsentieren, wobei R ein Alkylrest oder aromatischer Rest ist; R'" ist Wasserstoff, ein Alkylrest oder aromatischer Rest, -CH₂P(O)R'R" oder -CH₂OR; n ist eine ganze Zahl im Bereich von 0 bis 100; und
Mischen eines Epoxidharzes mit der Härterzusammensetzung.

## Revendications

1. Solution sensiblement homogène, comprenant :
- du dicyandiamide,
- et un durcisseur phénolique de formule générale : 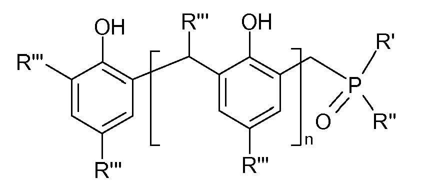 dans laquelle
R' et R" représentent des entités qui peuvent être identiques ou différentes et chacun de ces symboles représente un groupe symbolisé par -R ou -OR, étant entendu que R représente un groupe alkyle ou aromatique,
R"' représente un atome d'hydrogène, un groupe alkyle ou aromatique, ou un groupe symbolisé par -CH₂P(O)R'R" ou par -CH₂OR,
et l'indice n est un nombre entier valant de 0 à 100.

2. Solution conforme à la revendication 1, qui comprend en outre un solvant comportant au moins l'un des suivants : un alcool, une cétone et un éther de glycol.

3. Solution conforme à la revendication 2, dans laquelle l'alcool comprend un butanol.

4. Solution conforme à l'une des revendications 2 et 3, dans laquelle la cétone comprend de la méthyl-éthyl-cétone.

5. Solution conforme à l'une des revendications 2 à 4, dans laquelle l'éther de glycol comprend de l'éther méthylique de propylène-glycol.

6. Solution conforme à l'une des revendications 1 à 5, qui comprend en outre un catalyseur de type imidazole.

7. Solution conforme à l'une des revendications 1 à 6, qui comprend en outre au moins un durcisseur supplémentaire choisi dans l'ensemble formé par une résine novolaque à base de phénol, une résine novolaque à base de bisphénol A, et une résine novolaque à base de crésol.

8. Solution conforme à l'une des revendications 2 à 7, laquelle solution comprend :
- 1 à 60 % en poids du durcisseur phénolique,
- 1 à 20 % en poids de dicyandiamide,
- et 5 à 30 % en poids du solvant,
étant entendu que les pourcentages pondéraux indiqués sont rapportés au total des poids du durcisseur phénolique, du dicyandiamide et du solvant.

9. Composition durcissable, comprenant une solution conforme à la revendication 1 et une résine époxy.

10. Composition durcissable conforme à la revendication 9, laquelle composition comprend :
- 30 à 99 % en poids de la résine époxy,
- 0,01 à 5 % en poids de dicyandiamide,
- 1 à 40 % en poids du durcisseur phénolique,
- et 0 à 30 % en poids d'un solvant comportant au moins l'un des suivants : un alcool, une cétone et un éther de glycol,
étant entendu que les pourcentages pondéraux indiqués sont rapportés au total des poids du durcisseur phénolique, du dicyandiamide, de la résine époxy et du solvant.

11. Composition conforme à l'une des revendications 9 et 10, dans laquelle la résine époxyde comprend un composé contenant une polyoxazolidone à groupes terminaux de type époxyde.

12. Composition conforme à la revendication 11, dans laquelle le composé contenant une polyoxazolidone à groupes terminaux de type époxyde comprend un produit de réaction d'un composé de type poly-époxyde et d'un composé de type polyisocyanate.

13. Procédé de préparation d'une composition de dicyandiamide et de durcisseur, comprenant le fait de mélanger du dicyandiamide et un durcisseur phénolique de formule générale : 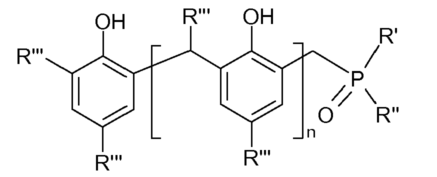 dans laquelle
R' et R" représentent des entités qui peuvent être identiques ou différentes et chacun de ces symboles représente un groupe symbolisé par -R ou -OR, étant entendu que R représente un groupe alkyle ou aromatique,
R"' représente un atome d'hydrogène, un groupe alkyle ou aromatique,
ou un groupe symbolisé par -CH₂P(O)R'R" ou par -CH₂OR, et l'indice n est un nombre entier valant de 0 à 100.

14. Procédé conforme à la revendication 13, qui comprend en outre le fait de mélanger, avec au moins l'un du dicyandiamide et du durcisseur phénolique, un solvant comportant au moins l'un des suivants : un alcool, une cétone et un éther de glycol.

15. Procédé de préparation d'une composition durcissable contenant du dicyandiamide, comprenant
- le fait de mélanger du dicyandiamide et un durcisseur phénolique pour en faire une composition de durcisseur, lequel durcisseur phénolique présente la formule générale : 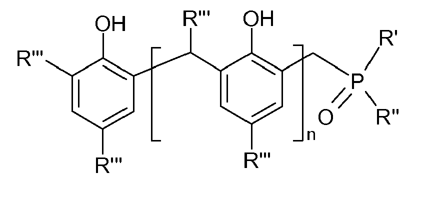 dans laquelle
R' et R" représentent des entités qui peuvent être identiques ou différentes et chacun de ces symboles représente un groupe symbolisé par -R ou -OR, étant entendu que R représente un groupe alkyle ou aromatique,
R"' représente un atome d'hydrogène, un groupe alkyle ou aromatique, ou un groupe symbolisé par -CH₂P(O)R'R" ou par -CH₂OR,
et l'indice n est un nombre entier valant de 0 à 100 ;
- et le fait de mélanger une résine époxyde à cette composition de durcisseur.
